# EUROPÄISCHE PATENTANMELDUNG

(11) **EP 4 763 593 A1**
(43) Veröffentlichungstag der Anmeldung: **24.06.2026**
(21) Anmeldenummer: 25219691.0
(22) Anmeldetag: 01.12.2025
(51) Int. Cl.: B60L 53/16, B60L 53/30, E01C 11/22, H02G 9/04, H02G 9/10

(54) **LADESYSTEM FÜR ELEKTRISCHE SPEICHER UND VERFAHREN ZUR MONTAGE EINES LADESYSTEMS**

(30) Priorität: 12.12.2024 DE 102024137485
(71) Anmelder: Pierburg GmbH, 41460 Neuss (DE)
(72) Erfinder: Paffrath, Holger, 50259 Pulheim (DE)
(74) Vertreter: Kirschner, Sebastian

(57) **Zusammenfassung**

Die Erfindung betrifft ein Ladesystem (1) für elektrische Speicher, insbesondere für Akkumulatoren von Elektrofahrzeugen, mit einem Grundkörper (2), insbesondere einem Bordsteinelement oder einem Plattenelement, mit einem Ladesteckerteil (3), mit einem Verbindungskabel (4) und mit einem Anschlusssteckerteil (5), wobei das Ladesteckerteil (3) in einem Hohlraum (6) des Grundkörpers (2) angeordnet und dazu vorgesehen ist, mit dem elektrischen Speicher zur Durchführung eines Ladevorgangs elektrisch verbunden zu werden, wobei das Ladesteckerteil (3) mittels des Verbindungskabels (4) mit dem Anschlusssteckerteil (5) elektrisch verbunden ist, wobei das Anschlusssteckerteil (5) dazu vorgesehen ist, über eine Unterseite (US) des Grundkörpers (2) hinweg mit einer Energiequelle, insbesondere über ein Stromnetzwerk, elektrisch verbunden zu werden. Die Erfindung betrifft weiterhin ein zugehöriges Verfahren zur Montage dieses Ladesystems (1).

Es wird eine einfache Montage des Ladesystems (1) und ein hoher Schutz des Ladesystems (1) vor Umwelteinflüssen erreicht, indem der Grundkörper (2) an seiner Unterseite (US) eine nach unten offene aber zu den Seiten und nach oben luftdicht ausgebildete Ausnehmung (7) aufweist, wobei das Anschlusssteckerteil (5), zumindest ein Verbindungsbereich des Anschlusssteckerteils (5) zur elektrischen Verbindung mit der Energiequelle, innerhalb der Ausnehmung (7) angeordnet ist.

## Beschreibung

Die Erfindung betrifft ein Ladesystem für elektrische Speicher mit den Merkmalen des Oberbegriffes des Patentanspruchs 1 und ein zugehöriges Verfahren zur Montage dieses Ladesystems.

Im Zuge der fortschreitenden Elektrifizierung von Kraftfahrzeugen müssen im öffentlichen Raum eine Vielzahl von Ladesystemen für elektrische Speicher der dann als Elektrofahrzeuge ausgeführten Kraftfahrzeuge geschaffen werden. Solche elektrischen Speicher sind insbesondere als Akkumulatoren ausgeführt. Die Ladesysteme weisen u.a. einen Grundkörper, ein Ladesteckerteil, ein Verbindungskabel und ein Anschlusssteckerteil auf. Das Ladesteckerteil ist in einem Hohlraum des Grundkörpers angeordnet und dazu vorgesehen, mit dem elektrischen Speicher zur Durchführung eines Ladevorgangs elektrisch verbunden zu werden. Das Ladesteckerteil ist mittels des Verbindungskabels mit dem Anschlusssteckerteil elektrisch verbunden. Das Anschlusssteckerteil ist dazu vorgesehen, über eine Unterseite des Grundkörpers hinweg mit einer Energiequelle, insbesondere über ein Stromnetzwerk, elektrisch verbunden zu werden. Die elektrische Verbindung zwischen dem elektrischen Speicher und dem Ladesteckerteil ist mit Hilfe eines Ladekabels erzeugbar. Das Ladekabel weist dazu ein zum Ladesteckerteil passendes Steckerteil auf.

Im Stand der Technik sind zur Realisierung solcher Ladesysteme sogenannte Ladesäulen bekannt, welche aufragend von einem befahr- bzw. begehbaren Untergrund angeordnet sind. Solche Ladesäulen nehmen aber einen großen Raum ein und stellen weiterhin ein Verkehrshindernis dar. Um solche Verkehrshindernisse zu vermeiden und den Platzbedarf der Ladesysteme zu verringern, ist es bekannt, Ladesysteme mit einem Bordsteinelement und mit dem Ladesteckerteil vorzusehen, wobei das Ladesteckerteil in einem Hohlraum des Bordsteinelementes angeordnet ist. Solche Ladesysteme mit Bordsteinelement können dann im öffentlichen Raum konventionelle Bordsteinelemente ohne Ladefunktion ersetzten, so dass durch das derartige Ladesystem kein zusätzlicher Platzbedarf und kein Verkehrshindernis entsteht. Der Hohlraum weist zumindest eine Öffnung auf, durch welche das Ladesteckerteil zur Verbindung mit dem Ladekabel zugänglich ist. Solche Ladesysteme u.a. mit dem Bordsteinelement und dem Ladesteckerteil werden auch als Bordsteinladegerät bezeichnet.

Ladesysteme mit einem Bordsteinelement sind durch ihre Anordnung in Bodennähe und somit durch Kontakt mit dem der Abstützung des Grundkörpers dienendem Erdreich im Außenbereich widrigen Umwelteinflüssen ausgesetzt. Dazu zählen z.B. Wasser, Salz, Schmutz und Eisbildung. Probleme durch Wasser, Salz, Schmutz und Eisbildung können insbesondere an elektrischen Bauteilen, z.B. an dem Ladesteckerteil, dem Verbindungskabel und dem Anschlusssteckerteil auftreten. Die elektrischen Bauteile selbst gegen diese Umwelteinflüsse, z.B. durch Kapselung, resistente Materialien, Abdichtungen, etc. zu schützen, bedeutet einen hohen Aufwand, welcher mit entsprechenden Kosten einhergeht. Weiterhin ist die Komplexität und somit auch die notwendige Dauer der Montage des Ladesysteme durch solche robusten, gegen die genannten Umwelteinflüsse geschützten Bauteile erhöht. Dichtheitsüberprüfungen des Ladesystems sind nach dessen Montage im Außenbereich, wenn überhaupt nur mit hohem Aufwand durchführbar.

Der Erfindung liegt daher die Aufgabe zugrunde, das Ladesystem für elektrische Speicher und das zugehörige Verfahren zur Montage dieses Ladesystems nun derart auszugestalten und / oder weiterzubilden, dass die Nachteile des Standes der Technik vermieden, zumindest aber verringert sind, wobei insbesondere trotz einfacher Montage des Ladesystems ein hoher Schutz des Ladesystems vor Umwelteinflüssen erreicht werden soll.

Diese der Erfindung zugrunde liegende Aufgabe wird nun zunächst durch ein Ladesystem für elektrische Speicher mit den Merkmalen des Patentanspruchs 1 gelöst.

Ein Aspekt der Erfindung liegt zunächst im Wesentlichen darin, dass der Grundkörper an seiner Unterseite eine nach unten offene aber zu den Seiten und nach oben luftdicht ausgebildete Ausnehmung aufweist, wobei das Anschlusssteckerteil, zumindest ein Verbindungsbereich des Anschlusssteckerteils zur elektrischen Verbindung mit der Energiequelle, innerhalb der Ausnehmung angeordnet ist.

Mittels der Ausnehmung ist somit eine nach unten offene ansonsten aber luftdichte Kammer ausgebildet und/oder ausbildbar, welche ähnlich wie eine Taucherglocke funktioniert. Durch in der Ausnehmung bzw. der Kammer angeordnete Luft, kann ein Eindringen von einer Flüssigkeit wie Wasser verhindert werden. Somit ist das Anschlusssteckerteil, zumindest der Verbindungsbereich des Anschlusssteckerteils zur elektrischen Verbindung mit der Energiequelle in der Luft, insbesondere in einer in der Ausnehmung ausgebildeten Luftblase, angeordnet und somit vor Umwelteinflüssen wie dem Wasser aber auch vor Schmutz, Eis oder Salz geschützt. Zumindest ist das Risiko einer Schädigung des Anschlusssteckerteils durch Wasser, Schmutz, Eis oder Salz reduziert. Denkbar ist auch weitere kritische Bauteile, wie z.B. Verbindungs-Steckerteile zur Übertragung von Informationsdaten, innerhalb der Ausnehmung anzuordnen.

Das Ladesystem ist bei der Erstinstallation und im Falle eines Service mit geringem Aufwand montierbar.

Vorteilhafterweise ist das Anschlusssteckerteil mit der Unterseite des Grundkörpers verbunden und/oder lösbar verbindbar. Z.B. ist das Anschlusssteckerteil komplett in der Ausnehmung angeordnet. Vorzugsweise ist eine Klemmverbindung zwischen dem Grundkörper und dem Anschlusssteckerteil, z.B. mit einer entsprechenden an der Unterseite des Grundkörpers befestigten Klammer, vorgesehen. Eine lösbare Verbindung hat Vorteile bei der Montage, da nämlich zunächst die elektrische Verbindung des Anschlusssteckerteils mit der Stromquelle erzeugt werden kann, um das Anschlusssteckerteil nachfolgend mit dem Grundkörper zu verbinden.

Gemäß einer bevorzugten Ausführungsform des Ladesystems durchdringt das Anschlusssteckerteil und/oder das Verbindungskabel den Grundkörper von seiner Unterseite bis zu seinem Hohlraum. Das Anschlusssteckerteil und/oder das Verbindungskabel sind vorzugsweise gegenüber dem Grundkörper abgedichtet, z.B. mit einer entsprechend Dichtmasse. Diese Abdichtung kann in einem geschützten Raum wie einer Werkstatt oder Fabrik erzeugt werden, so dass eine Montage vor Ort / im Einsatzgebiet erleichtert ist. Dadurch dass das Anschlusssteckerteil und/oder das Verbindungskabel den Grundkörper von seiner Unterseite bis zu seinem Hohlraum durchdringt, ist das Ladesystem über das Anschlusssteckerteil mit in einem Boden verlaufenden Netzkabel eines Stromnetzes und somit einer mit dem Stromnetz verbundenen Energiequelle verbindbar. Im montierten Zustand ist dann das Anschlusssteckerteil und auch das Netzkabel vor äußeren mechanischen Einflüssen z.B. von einem Fahrzeug oder von Personen durch den Grundkörper geschützt.

Weiter bevorzugt ist die Ausnehmung mittels eines den Hohlraum des Grundkörpers nach unten begrenzenden Bodenbereiches des Grundkörpers und mit von diesem Bodenbereich nach unten auskragenden Wandungen des Grundkörpers begrenzt. Diese seitlichen Wandungen werden tiefer als der Bodenbereich heruntergezogen, so dass die seitlichen Wandungen und der Bodenbereich eine Art "Taucherglocke" bilden. Zur Erhöhung der Stabilität und Verringerung der Abdichtungsproblematiken sind die Wandungen des Grundkörpers mit dem Bodenbereich vorzugsweise als ein gemeinsames Bauteil ausgeführt.

Vorteilhafterweise ist mittels der Ausnehmung eine am unteren Ende des Grundkörpers in einer Ebene liegende Ausnehmungsöffnung gebildet. Die Ebene ist dazu vorgesehen, bei der Montage des Ladesystems horizontal ausgerichtet zu werden. Somit ist eine gleichmäßige Ausbildung der Luftblase in der Ausnehmung ermöglicht.

Vorzugsweise ist das Anschlusssteckerteil den Bodenbereich des Grundkörpers unter Ausbildung einer fluidisch dichten Verbindung durchdringend angeordnet. Das Anschlusssteckerteil ist vorzugsweise mit dem Grundkörper in dessen Bodenbereich mittels einer Dichtmasse vergossen und/oder mit dem Grundkörper verklebt. Der Verbindungsbereich des Anschlusssteckerteils zur elektrischen Verbindung mit der Energiequelle ragt von dem Bodenbereich des Grundkörpers in die Ausnehmung hinein. Durch diese den Bodenbereich des Grundkörpers durchdringende Anordnung des Anschlusssteckerteils ist das Anschlusssteckerteil auf einfache Weise mechanisch an dem Grundkörper abstützbar, z.B. durch entsprechende am Grundkörper und/oder dem Anschlusssteckerteil ausgebildete Anschlagbereiche.

Nach einer weiteren vorteilhaften Ausführungsform des Ladesystems ist das Verbindungskabel den Bodenbereich des Grundkörpers unter Ausbildung einer fluidisch dichten Verbindung durchdringend angeordnet. Wenn das Verbindungskabel den Bodenbereich des Grundkörpers durchdringend angeordnet ist, ist eine flexible Positionierung des Anschlusssteckerteils in der Ausnehmung ermöglicht. Das Verbindungskabel ist vorzugsweise mit dem Grundkörper in dessen Bodenbereich mittels einer Dichtmasse vergossen und/oder mit dem Grundkörper verklebt. Denkbar wäre auch, das Verbindungskabel mit Hilfe von abdichtenden Hülsen mit dem Grundkörper zu verbinden.

Es kann vorteilhaft sein, wenn der Bodenbereich mittels eines vorzugsweise plattenförmigen Bodenelements ausgebildet ist, wobei das Bodenelement fluidisch dicht mit dem Grundkörper verbunden ist. Durch ein solches plattenförmiges Bodenelement kann eine vereinfachte Montage der weiteren Elemente des Ladesystem in dem Hohlraum des Grundkörpers aufgrund des dazu dann noch nicht montierten plattenförmigen Bodenelements ermöglicht werden. Diese Montage erfolgt vorzugsweise in einer vor Umwelteinflüssen geschützten Umgebung wie einer Werkstatt oder Fabrik. Der Hohlraum des Grundkörpers ist aufgrund des plattenförmigen Bodenelements während dieser Montage mit nicht montierten plattenförmigen Bodenelement von einer Unterseite zugänglich, so dass auf einer Oberseite des Grundkörpers ausgebildete Öffnungen in ihrer Größe minimierbar sind. Im Betrieb des Ladesystems ist durch die an der Oberseite des Grundkörpers ausgebildeten Öffnungen ein Ladekabel in den Hohlraum zur Verbindung mit dem Ladesteckerteil einführbar.

Nach einer weiteren bevorzugten Ausführungsform des Ladesystems verjüngt sich die Ausnehmung von der Ausnehmungsöffnung zum Bodenbereich hin. Somit ist die Stabilität der vom Bodenbereich nach unten auskragenden Wandungen des Grundkörpers einfach erhöhbar, deren Breite sich dazu vorzugsweise reziprok zur Verjüngung der Ausnehmung vergrößert. Durch die Verjüngung ist weiterhin eine Auszugsschräge für eine Herstellung des Grundkörpers in einem Gussverfahren realisierbar.

Die der Erfindung zugrundeliegende Aufgabe wird auch durch ein Verfahren zur Montage eines Ladesystems mit den Merkmalen des Patentanspruchs 10 gelöst.

Ein Aspekt der Erfindung liegt dann im Wesentlichen darin, dass die folgenden Schritte vorzugsweise in der genannten Reihenfolge durchgeführt werden:
- elektrisches Verbinden des Anschlusssteckerteils mit der Energiequelle;
- derartiges Positionieren des Grundkörpers auf einem dazu vorgesehen Untergrund eines Fahrbereiches und/oder eines Gehbereiches, dass die Ausnehmung zumindest teilweise, insbesondere im Bereich des Anschlusssteckerteils, mit Luft gefüllt ist.

Das elektrische Verbinden des Anschlusssteckerteils mit der Energiequelle erfolgt vorzugsweise mittels in dem Untergrund verlaufenden Netzkabeln. Der Untergrund, auf welchem der Grundkörper positioniert wird, weist vorzugsweise eine ebene horizontal ausgerichtete Oberfläche auf. Eine solche ebene horizontal ausgerichtete Oberfläche ist auch durch entsprechende Bearbeitung des Untergrundes, z.B. durch Glattstreichen eines mittels eines Schüttgutes gebildeten Untergrundes, realisierbar.

Mittels der genannten Bordsteinelemente können dann konventionelle Bordsteinelemente ohne Ladefunktion ersetzt, bzw. auch mit weiteren vorzugsweise konventionellen Bordsteilelementen entsprechende Borsteinkanten gebildet werden. Die hier beschriebenen Bordsteinelemente mit Ladefunktion kommen insbesondere benachbart zu Parkplätzen, wie Straßenparkplätzen, Kunden- und Mitarbeiterparkplätzen und/oder P&R-Parkplätzen zum Einsatz.

Mittels des Ladesystems können je nach Ausbildung des Grundkörpers aber nicht nur konventionelle Bordsteinelemente, sondern auch konventionelle Plattenelemente (ohne Ladefunktion) zur Ausbildung eines Fahrbereiches und/oder eines Gehbereiches ersetzt werden. Denkbar wäre auch, einen entsprechend ausgebildeten Grundkörper des Ladesystems in eine dafür vorgesehene, insbesondere speziell erzeugte, Ausnehmung im Fahrbereich und/oder im Gehbereich einzusetzen. Der Fahrbereich und/oder Gehbereich kann neben den genannten Plattenelementen auch mit Hilfe einer Teerschicht ausgebildet sein.

Es gibt nun eine Vielzahl von Möglichkeiten, das erfindungsgemäße Ladesystem für elektrische Speicher und das erfindungsgemäße zugehörige Verfahren zur Montage dieses Ladesystems in vorteilhafter Art und Weise auszugestalten und weiterzubilden. Es darf hierzu zunächst auf die dem Patentanspruch 1 nachgeordneten Patentansprüche verwiesen werden. Im Folgenden werden nun bevorzugte Ausgestaltungen des erfindungsgemäßen Ladesystems für elektrische Speicher und des erfindungsgemäßen zugehörigen Verfahrens zur Montage dieses Ladesystems anhand der Zeichnung und der dazugehörigen Beschreibung näher erläutert bzw. beschrieben. In der Zeichnung zeigt:
- Fig.1: in schematischer Darstellung ein erstes Ausführungsbeispiel des Ladesystems für elektrische Speicher in einer Seitenansicht zum Teil im Schnitt, und
- Fig.2: in schematischer Darstellung ein zweites Ausführungsbeispiel des Ladesystems für elektrische Speicher in einer Seitenansicht zum Teil im Schnitt.

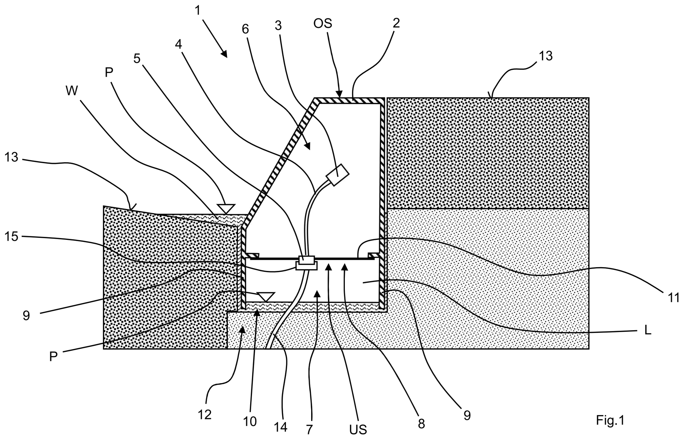

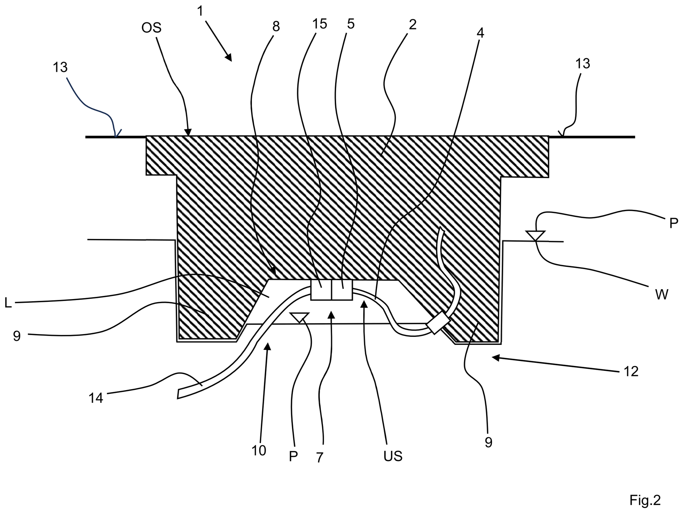

Fig.1 und Fig.2 zeigen jeweils ein Ladesystem 1 für elektrische Speicher, insbesondere für Akkumulatoren von Elektrofahrzeugen, u.a. mit einem Grundkörper 2, insbesondere gemäß Fig.1 einem Bordsteinelement oder gemäß Fig. 2 einem Plattenelement, mit einem Ladesteckerteil 3, mit einem Verbindungskabel 4 und mit einem Anschlusssteckerteil 5. Das Ladesteckerteil 3 ist in einem Hohlraum 6 des Grundkörpers 2 angeordnet und dazu vorgesehen, mit dem elektrischen Speicher zur Durchführung eines Ladevorgangs elektrisch verbunden zu werden. Das Ladesteckerteil 3 ist mittels des Verbindungskabels 4 mit dem Anschlusssteckerteil 5 elektrisch verbunden. Das Anschlusssteckerteil 5 ist dazu vorgesehen, über eine Unterseite US des Grundkörpers 2 hinweg mit einer Energiequelle, insbesondere über ein Stromnetzwerk, elektrisch verbunden zu werden.

Das Ladesystem 1 ist an allen Flächen Wasser W und/oder Schmutz ausgesetzt. Das Wasser W kann das Ladesystem 1 in Form Grundwasser oder als ggf. salzhaltiges Oberflächenwasser erreichen. Das Wasser W kann bei entsprechenden Temperaturen z.B. im Winter zu Eis gefrieren. Fig.1 und Fig.2 zeigen das Wasser W insbesondere auch anhand von Wasserpegeln P, welche sich beim montierten Ladesystem 1 und entsprechender Belastung mit Wasser W (Grundwasser, Regen) einstellen.

Der Grundkörper 2 weist an seiner Unterseite US eine nach unten offene aber zu den Seiten und nach oben luftdicht ausgebildete Ausnehmung 7 auf. Das Anschlusssteckerteil 5, zumindest ein Verbindungsbereich des Anschlusssteckerteils 5 zur elektrischen Verbindung mit der Energiequelle, ist innerhalb der Ausnehmung 7 angeordnet.

Das Anschlusssteckerteil 5 ist in dem in der Ausnehmung 7 angeordneten Bereich von Luft L umgeben, obwohl in dem gemäß Fig.1 und Fig.2 gezeigten montierten Zustand des Ladesystems 1 das Ladesystem 1 zum Teil von Wasser W umgeben ist. Seitlich neben dem Grundkörper 2 kann sich dabei eine höherer Wasserpegel P einstellen, als im Bereich bzw. angrenzend der Ausnehmung 7. Das Wasser W kann nur so weit in die Ausnehmung 7 eindringen, bis der Druck der durch das Wasser W komprimierten Luft L dem im Grenzbereich zwischen Wasser W und Luft L wirkenden hydraulischen Wasserdruck entspricht.

Das Anschlusssteckerteil 5 ist mit der Unterseite US des Grundkörpers 2 verbunden und/oder lösbar verbindbar. Das Anschlusssteckerteil 5 und/oder das Verbindungskabel 4 durchdringt den Grundkörper 2 von seiner Unterseite US bis zu seinem Hohlraum 6. Gemäß Fig.1 durchdringt das Anschlusssteckerteil 5 den Grundkörper 2 von seiner Unterseite US bis zu seinem Hohlraum 6. Gemäß Fig.2 durchdringt das Verbindungskabel 4 den Grundkörper 2 von seiner Unterseite US bis zu seinem Hohlraum 6. Denkbar wäre demgegenüber auch, dass der Grundkörper von seiner Unterseite bis zu seinem Hohlraum zum Teil vom Anschlusssteckerteil und zum Teil vom Verbindungskabel durchdrungen ist.

Die Ausnehmung 7 ist mittels eines den Hohlraum 6 des Grundkörpers 2 nach unten begrenzenden Bodenbereiches 8 des Grundkörpers 2 und mit von diesem Bodenbereich 8 nach unten auskragenden Wandungen 9 des Grundkörpers 2 begrenzt. Ein den Hohlraum 6 seitlich begrenzender Bereich des Grundkörpers 2 geht in die Wandungen 9 über. Gemäß Fig.2 ist ein einteiliger Grundkörper 2 vorgesehen, bei welchem auch der Bodenbereich 8 in die Wandungen 9 übergeht.

Mittels der Ausnehmung 7 ist eine am unteren Ende des Grundkörpers 2 in einer Ebene liegende Ausnehmungsöffnung 10 gebildet. Die Ausnehmungsöffnung 10 ist vorzugsweise rechteckig insbesondere mit abgerundeten Ecken ausgebildet. Anderen Formen der Ausnehmungsöffnung wie zum Beispiel ein Oval sind denkbar. Durch die in einer Ebene liegende Ausnehmungsöffnung 10 ist die Ausnehmungsöffnung 10 komplett in einer horizontalen Ebene anordenbar. Neben der Ausnehmungsöffnung 10 ist ein vorzugsweise in derselben Ebene liegender Abstützbereich des Grundkörpers 2 ausgebildet, mittels welchem der Grundkörper 2 nach unten gegenüber einem Untergrund 12 abstützbar ist. Der Abstützbereich weist vorzugsweise zumindest entlang einer Seite des Grundkörpers 2 eine gleichbleibende Breite auf.

Das Anschlusssteckerteil 5 ist gemäß Fig.1 den Bodenbereich 8 des Grundkörpers 2 unter Ausbildung einer fluidisch dichten Verbindung durchdringend angeordnet. Diese Verbindung ist insbesondere luftdicht. Insbesondere ist das Anschlusssteckerteil 5 in den Bodenbereich 8 eingeklebt, z.B. mit einem Epoxidharz. Andere Arten der fluidisch dichten Verbindung sind denkbar. Z.B. könnten Gummi aufweisende Dichtringe verwendet werden. Diese den Bodenbereich 8 durchdringende Anordnung des Anschlusssteckerteils 5 ist robust gegen Wasser, Schmutz und Eis.

Gemäß Fig.2 ist das Verbindungskabel 4 den Bodenbereich 8 des Grundkörpers 2 unter Ausbildung einer fluidisch dichten Verbindung durchdringend angeordnet. Auch diese Verbindung ist insbesondere luftdicht. Man spricht auch von einer Kabeldurchführung. Diese Kabeldurchführung ist robust gegen Wasser, Schmutz und Eis. Gemäß Fig.2 tritt das Verbindungskabel 4 im Bereich der Wandungen 9 in den Grundkörper 2 ein, durch dringt dann den Bodenbereich 8 und endet in dem hier nicht gezeigten Hohlraum, in welchem das Verbindungskabel 4 endet, wobei an diesem Ende das Ladesteckerteil 3 mit dem Verbindungskabel 4 verbunden ist. Gemäß Fig.2 ist das Anschlusssteckerteil 5 komplett in der Ausnehmung 7 angeordnet. Gemäß Fig.2 ist das Anschlusssteckerteil 5 von unten mit dem Grundkörper 2, insbesondere dessen Bodenbereich 8, verbunden.

Der Bodenbereich 8 ist gemäß Fig.1 mittels eines vorzugsweise plattenförmigen Bodenelements 11 ausgebildet, wobei das Bodenelement 11 fluidisch dicht, insbesondere luftdicht, mit dem Grundkörper 2 verbunden ist. Anders ausgedrückt ist durch das Bodenelement 11 ein zumindest zweiteiliger Grundkörper 2 realisiert. Insbesondere ist zwischen dem Bodenelement 11 und dem Grundkörper 2 zur Abdichtung eine vorzugsweise umlaufende Dichtung angeordnet. Das Bodenelement 11 ist mit einem am Grundkörper 2 ausgebildeten Vorsprung, z.B. gemäß Fig.1 einer Unterseite des Vorsprungs verbunden. Das Bodenelement könnte auch mit einer Oberseite eines solchen Vorsprungs verbunden sein und auf diesem aufliegen.

Die fluidisch dichten, insbesondere luftdichten, Verbindungen zwischen dem Bodenelement 11 und dem Grundkörper 2, dem Verbindungskabel 4 und dem Grundkörper 2 und/oder dem Anschlusssteckerteil 5 und dem Grundkörper 2 müssen für Installation und Deinstallation des Ladesystems 1 in der vorgesehen Umgebung seines Einsatzes nicht geöffnet oder geschlossen werden. Sie können somit zuvor mit den nötigen Qualitätssicherungsmaßnahmen in geeigneter Umgebung wie einer Werkstatt oder Fabrik hergestellt werden.

Gemäß Fig.2 verjüngt sich die Ausnehmung 7 von der Ausnehmungsöffnung 10 zum Bodenbereich 8 hin. Insbesondere weist die Ausnehmung 7 somit die Form eines rechteckigen Pyramidenstumpfes auf. Wenn die Ausnehmungsöffnung eine ovale Form aufweist, könnte die Ausnehmung dann die Form eines Kegelstumpfes mit eben ovaler Grundfläche aufweisen.

In dem Verfahren zur Montage des Ladesystems 1 werden die folgenden Schritte vorzugsweise in der genannten Reihenfolge durchgeführt:
- elektrisches Verbinden des Anschlusssteckerteils 5 mit der Energiequelle;
- derartiges Positionieren des Grundkörpers 2 auf einem dazu vorgesehen Untergrund 12 eines Fahrbereiches und/oder eines Gehbereiches 13, dass die Ausnehmung 7 zumindest teilweise, insbesondere im Bereich des Anschlusssteckerteils 5, mit Luft L gefüllt ist.

Das Anschlusssteckerteil 5 wird mit der Energiequelle über ein Netzkabel 14 verbunden. Dazu weist das Netzkabel 14 ein zum Anschlusssteckerteil 5 passendes Netzkabelsteckerteil 15 auf. Das Anschlusssteckerteil 5 oder das Netzkabelsteckerteil 15 ist als Buchse und das andere Teil ist als Stecker ausgeführt. Die Verbindung zwischen dem Anschlusssteckerteil 5 und dem Netzkabelsteckerteil 15 ist also eine lösbare Steckverbindung. Insbesondere wird also das Anschlusssteckerteil 5 mit der Energiequelle elektrisch verbunden, indem die Verbindung des Anschlusssteckerteils 5 mit dem Netzkabelsteckerteil 15 erzeugt wird. Es ist dabei auch denkbar, dass das Netzkabel 14 erst nach der Montage des Ladesystems 1 mit der Energiequelle verbunden wird.

Die vor Ort benachbart des Fahrbereichs und/oder Gehbereichs 13 bei der Montage des Ladesystems 1 vorzunehmenden Verbindung des Anschlusssteckerteils 5 mit dem Netzkabelsteckerteil 15 kann nach dem Verbinden vor Ort nicht geprüft werden. Da die Verbindung aber von Luft L umgeben ist bzw. sich in der Luftblase befindet, ist das Risiko, dass dort Wasser W oder Schmutz eindringt, nur gering. Auch die Verbindung zwischen Netzkabel 14 und Netzkabelsteckerteil 15 ist in der Luftblase angeordnet und daher einem geringen Risiko des Eindringens von Wasser W bzw. einem geringen Risiko der Verschmutzung ausgesetzt.

Insbesondere die lösbare Steckverbindung zwischen dem Anschlusssteckerteil 5 und dem Netzkabelsteckerteil 15, die im Produktleben des Ladesystems 1 unter Umständen mehrfach geöffnet und geschlossen werden muss, ohne sie jeweils wieder prüfen zu können, ist durch das beschriebene Ladesystem 1 und das zugehörige Verfahren zur Montage des Ladysystems vor Wasser W und Schmutz erfolgreich geschützt.

Fig.1 und Fig.2 zeigen jeweils das Ladesystem 1 für elektrische Speicher, insbesondere für Akkumulatoren von Elektrofahrzeugen. Der Hohlraum 6 weist zumindest eine hier nicht gezeigte Öffnung auf. Die Öffnung ist mittels eines hier nicht gezeigten Verschlusssystems, insbesondere einer Klappe des Verschlusssystems verschließbar, insbesondere durch Positionierung der Klappe in einer Klappen-Verschlussposition. Ein bestimmter freier Öffnungsquerschnitt der Öffnung ist realisiert, wenn das Verschlusssystem geöffnet ist, insbesondere die Klappe in einer Klappen-Ladeposition positioniert ist. Durch diese Öffnung, welche insbesondere in der Oberseite OS des Grundkörpers 2 ausgebildet ist, ist das Ladesteckerteil 3 zur Verbindung mit einem Ladekabel zugänglich. Das Ladekabel dient dazu, das Ladesteckerteil 3 mit dem elektrischen Speicher zu verbinden. Mit dem montierten Ladesystem 1 ist dann also der elektrische Speicher, insbesondere eines Elektrofahrzeuges, mit einer Energiequelle für einen Ladevorgang verbindbar.

Das Ladesystem 1 mit einem als Bordsteinelement ausgebildeten Grundkörper 2 gemäß Fig.1 dient mit weiteren konventionellen Bordsteinelementen ohne Ladefunktion dazu eine Borsteinkante auszubilden. Solche Borsteinkanten dienen auch der Begrenzung von Parkplätzen für Kraftfahrzeuge. Das in Fig.1 gezeigte Ladesystem 1 ist insbesondere neben solchen Parkplätzen anordenbar, so dass der elektrische Speicher des Kraftfahrzeugs aufgeladen werden kann, wenn das Kraftfahrzeug auf diesem Parkplatz steht.

Das Ladesystem 1 mit einem als Plattenelement ausgebildeten Grundkörper 2 gemäß Fig.2 dient mit weiteren konventionellen Plattenelementen ohne Ladefunktion und/oder einer Teerschicht dazu einen Fahrbereich und/oder Gehbereich 13 auszubilden.

Das Ladesystem 1 befindet sich nach dessen Montage vorzugsweise in dem Fahrbereich und/oder Gehbereich 13 und schließt oben bündig mit diesem ab. Gemäß Fig.1 ist mit dem Ladesystem 1 eine Stufe in dem Fahrbereich und/oder im Gehbereich 13 ausgebildet, insbesondere in einer oberen Ebene ein Gehbereich ausgebildet und in einer unteren Ebene eine Begrenzung zu einem Fahrbereich ausgebildet.

Im Folgenden wird nun ein Ladevorgang eines Elektrofahrzeuges beschrieben. Ein Fahrer des Elektrofahrzeuges parkt zunächst neben dem Ladesystem 1. Nach einer Autorisierung durch den Fahrer wird das Verschlusssystem geöffnet. Dann verbindet der Fahrer das Ladekabel zum einen mit dem Elektrofahrzeug und zum anderen mit dem Ladesteckerteil 3 in dem Ladesystem 1.

Dabei erzeugt der Fahrer eine elektrische Verbindung zwischen einem Steckerteil des Ladekabels und dem Ladesteckerteil 3. Das Ladesteckerteil 3 ist vorzugsweise als weibliches Steckerteil und somit als Buchse ausgeführt. Das Steckerteil des Ladekabels ist vorzugsweise als männliches Steckerteil und somit als Stecker ausgeführt. Dann erfolgt ein Laden des elektrischen Speichers des Elektrofahrzeugs mit Hilfe der Energiequelle. Nach oder zum Beenden dieses Ladens trennt der Fahrer die Steckverbindung zwischen dem Ladesteckerteil 3 und dem Steckerteil des Ladekabels. Wenn das Steckerteil des Ladekabels komplett aus dem Hohlraum 6 entfernt wurde, wird das Verschlusssystem wieder geschlossen.

### Bezugszeichenliste

- 1: Ladesystem
- 2: Grundkörper
- 3: Ladesteckerteil
- 4: Verbindungskabel
- 5: Anschlusssteckerteil
- 6: Hohlraum des Grundkörpers 2
- 7: Ausnehmung
- 8: Bodenbereich des Grundkörpers 2
- 9: Wandungen des Grundkörpers 2
- 10: Ausnehmungsöffnung
- 11: Bodenelement
- 12: Untergrund
- 13: Fahrbereich und/oder Gehbereich
- 14: Netzkabel
- 15: Netzkabelsteckerteil

- US: Unterseite des Grundkörpers 2
- OS: Oberseite des Grundkörpers 2
- L: Luft
- W: Wasser
- P: Wasserpegel

## Patentansprüche

1. Ladesystem (1) für elektrische Speicher, insbesondere für Akkumulatoren von Elektrofahrzeugen, mit einem Grundkörper (2), insbesondere einem Bordsteinelement oder einem Plattenelement, mit einem Ladesteckerteil (3), mit einem Verbindungskabel (4) und mit einem Anschlusssteckerteil (5), wobei das Ladesteckerteil (3) in einem Hohlraum (6) des Grundkörpers (2) angeordnet und dazu vorgesehen ist, mit dem elektrischen Speicher zur Durchführung eines Ladevorgangs elektrisch verbunden zu werden, wobei das Ladesteckerteil (3) mittels des Verbindungskabels (4) mit dem Anschlusssteckerteil (5) elektrisch verbunden ist, wobei das Anschlusssteckerteil (5) dazu vorgesehen ist, über eine Unterseite (US) des Grundkörpers (2) hinweg mit einer Energiequelle, insbesondere über ein Stromnetzwerk, elektrisch verbunden zu werden, **dadurch gekennzeichnet, dass** der Grundkörper (2) an seiner Unterseite (US) eine nach unten offene aber zu den Seiten und nach oben luftdicht ausgebildete Ausnehmung (7) aufweist, wobei das Anschlusssteckerteil (5), zumindest ein Verbindungsbereich des Anschlusssteckerteils (5) zur elektrischen Verbindung mit der Energiequelle, innerhalb der Ausnehmung (7) angeordnet ist.

2. Ladesystem (1) nach Anspruch 1, **dadurch gekennzeichnet, dass** das Anschlusssteckerteil (5) mit der Unterseite (US) des Grundkörpers (2) verbunden und/oder lösbar verbindbar ist.

3. Ladesystem (1) nach Anspruch 1 oder 2, **dadurch gekennzeichnet, dass** das Anschlusssteckerteil (5) und/oder das Verbindungskabel (4) den Grundkörper (2) von seiner Unterseite (US) bis zu seinem Hohlraum (6) durchdringt.

4. Ladesystem (1) nach Anspruch 1, 2 oder 3, **dadurch gekennzeichnet, dass** die Ausnehmung (7) mittels eines den Hohlraum (6) des Grundkörpers (2) nach unten begrenzenden Bodenbereiches (8) des Grundkörpers (2) und mit von diesem Bodenbereich (8) nach unten auskragenden Wandungen (9) des Grundkörpers (2) begrenzt ist.

5. Ladesystem (1) nach einem der vorangehenden Ansprüche, **dadurch gekennzeichnet, dass** mittels der Ausnehmung (7) eine am unteren Ende des Grundkörpers (2) in einer Ebene liegende Ausnehmungsöffnung (10) gebildet ist.

6. Ladesystem (1) nach Anspruch 4 oder 5, **dadurch gekennzeichnet, dass** das Anschlusssteckerteil (5) den Bodenbereich (8) des Grundkörpers (2) unter Ausbildung einer fluidisch dichten Verbindung durchdringend angeordnet ist.

7. Ladesystem (1) nach Anspruch 4, 5 oder 6, **dadurch gekennzeichnet, dass** das Verbindungskabel (4) den Bodenbereich (8) des Grundkörpers (2) unter Ausbildung einer fluidisch dichten Verbindung durchdringend angeordnet ist.

8. Ladesystem (1) nach einem der vorangehenden Ansprüche 4 bis 7, **dadurch gekennzeichnet, dass** der Bodenbereich (8) mittels eines vorzugsweise plattenförmigen Bodenelements (11) ausgebildet ist, wobei das Bodenelement (11) fluidisch dicht mit dem Grundkörper (2) verbunden ist.

9. Ladesystem (1) nach einem der vorangehenden Ansprüche 4 bis 8, **dadurch gekennzeichnet, dass** sich die Ausnehmung (7) von der Ausnehmungsöffnung (10) zum Bodenbereich (8) hin verjüngt.

10. Verfahren zur Montage eines Ladesystems (1) nach einem der vorangehenden Ansprüche, wobei die folgenden Schritte vorzugsweise in der genannten Reihenfolge durchgeführt werden:
• elektrisches Verbinden des Anschlusssteckerteils (5) mit der Energiequelle;
• derartiges Positionieren des Grundkörpers (2) auf einem dazu vorgesehen Untergrund (12) eines Fahrbereiches und/oder eines Gehbereiches (13), dass die Ausnehmung (7) zumindest teilweise, insbesondere im Bereich des Anschlusssteckerteils (5), mit Luft (L) gefüllt ist.
